# EUROPÄISCHE PATENTANMELDUNG

(11) **EP 2 465 648 A2**
(43) Veröffentlichungstag der Anmeldung: **20.06.2012**
(21) Anmeldenummer: 11193720.7
(22) Anmeldetag: 15.12.2011
(51) Int. Cl.: B25G 1/10

(54) **Griffelement zur Handhabung von Werkzeugen und dergleichen, sowie Verfahren zu seiner Herstellung**

(30) Priorität: 15.12.2010 DE 102010063169
(71) Anmelder: Ing. Johann HÖRTNAGL-WERKZEUGE Ges.m.b.H, 6166 Fulpmes (AT)
(72) Erfinder: Hörtnagl, Johann, 6166 Fulpmes (AT)
(74) Vertreter: Isarpatent

(57) **Zusammenfassung**

Die Erfindung betrifft ein Griffelement zur Herstellung von Werkzeugen und dergleichen. Das Griffelement weist dabei ein Naturstoff-Bindemittel-Gemisch, auf und das Griffelement zumindest einen durch Druck reversibel verformbaren Bereich. Die Erfindung betrifft ebenfalls ein entsprechendes Verfahren zur Herstellung des Griffelementes sowie zwei Verwendungen.

## Beschreibung

Die Erfindung betrifft ein Griffelement zur Handhabung von Werkzeugen und dergleichen, wobei das Griffelement ein Naturstoff-Bindemittel-Gemisch aufweist. Die Erfindung betrifft ebenfalls ein Verfahren zur Herstellung eines Griffelementes, insbesondere gemäß zumindest einem der Ansprüche 1 bis 9.

Griffe von Werkzeugen dienen zur zuverlässigen Handhabung des entsprechenden Werkzeuges. So dient beispielsweise der Griff eines Hammers dazu, die Kraft der Hand bzw. des Armes auf den Nagel zu übertragen. Allerdings sind derartige Griffe vielfältigen thermischen, mechanischen oder auch chemischen Einflüssen ausgesetzt, so dass diese auch eine entsprechende Beständigkeit bzw. Festigkeit aufweisen müssen. In einer üblichen Werkstattumgebung sind die Griffe beispielsweise Farben, Lacken, Ölen und dergleichen ausgesetzt. Aus der EP 1 875 989 B1 ist ein zwei-komponentiges Griffelement mit Naturstoff bekannt geworden, wobei ein Mantelelement ein Naturstoff-Kunststoff-Stoffgemisch enthält und der Naturstoff Flachs, Baumwolle, Schurwolle und / oder Leder enthält.

Ein derartiges Griffelement weist zwar eine verbesserte Haptik gegenüber einem üblichen Kunststoffgriff auf, jedoch können bei längerer Handhabung Irritationen an der Hand durch die Form des Griffelementes auftreten. Darüber hinaus wird die Oberfläche des Naturstoff-Bindemittel-Gemisches bei niedrigeren Temperaturen aufgrund einer Feuchtigkeitsaufnahme der Oberfläche des Griffes fest und verursacht beim Benutzer des Werkzeugs ein unangenehmes Haptikgefühl.

Es ist daher eine Aufgabe der vorliegenden Erfindung, ein Griffelement zur Verfügung zu stellen, welches über einen großen Temperaturbereich ein angenehmes Haptikgefühl hervorruft und gleichzeitig eine sichere Führung eines Werkzeugs mit dem Griffelement zur Verfügung stellt. Eine weitere Aufgabe ist es, ein Griffelement sowie ein Verfahren zu seiner Herstellung anzugeben, welches Irritationen an der Hand beim Handhaben des Griffelementes reduziert.

Diese Aufgaben werden bei einem Griffelement mit den Merkmalen des Oberbegriffes des Anspruches 1 mit den Merkmalen des kennzeichnenden Teils des Anspruches 1 gelöst. Diese Aufgaben werden bei einem Verfahren gemäß dem Oberbegriff des Anspruches 10 mit den Merkmalen des kennzeichnenden Teils des Anspruches 10 gelöst.

Ein derartiges Griffelement weist den Vorteil auf, dass sich das Griffelement auf einfache Weise an eine Handkontur eines Benutzers anpasst und auf diese Weise sowohl eine sicherere Führung eines mit einem Griffelement versehenen Werkzeugs als auch eine Verminderung von Irritationen an der Hand des Benutzers des Werkzeugs ermöglicht. Das Griffelement weist ebenso eine weiter verbesserte Haptik, auch bei tieferen Temperaturen auf; gleichzeitig ist es hinreichend fest ausgebildet und weist eine ausreichende Haltbarkeit bzw. hohe Lebensdauer auf.

Weitere Merkmale und Vorteile der Erfindung sind in den Unteransprüchen beschrieben.

Zweckmäßigerweise enthält der Naturstoff Leder und / oder Flachs und/oder Kork, insbesondere in Partikelform. Leder weist beispielsweise eine besonders angenehme Oberfläche auf und erzeugt damit ein angenehmes Haptikgefühl beim Benutzer. Gleichzeitig nimmt Leder Schweiß leicht auf. Flachs hingegen weist den Vorteil auf, dass dieses beispielsweise von Natur bakteriozid, im Wesentlichen antistatisch und schmutzabweisend ist.

Vorteilhafterweise umfasst das Naturstoff-Bindemittel-Gemisch zusätzlich zumindest ein Elastikmittel. Durch ein zusätzliches Elastikmittel im Naturstoff-Bindemittel-Gemisch kann eine weitere Verbesserung der Anpassbarkeit des verformbaren Bereichs des Griffelementes an eine Hand eines Benutzers erreicht werden. Selbstverständlich ist es möglich, auch das gesamte Griffelement mit den Elastikmitteln zu versehen, um so bei einem Fallenlassen des Werkzeugs durch einen Benutzer Beschädigungen des Werkzeugs bei einem Aufschlagen des Griffelementes auf einen harten Boden zu reduzieren.

Zweckmäßigerweise ist das Elastikmittel in Form einer Mehrzahl von geleeartigen Elastikkügelchen ausgebildet. Elastikgeleekügelchen bieten den Vorteil, dass diese im Naturstoff-Bindemittel-Gemisch auf einfache Weise eingebracht und homogen verteilt werden können. Damit wird die Anpassbarkeit des verformbaren Bereichs des Griffelementes noch weiter verbessert. Bei einem Umgreifen des Griffelementes mit einer Hand werden die Elastikkügelchen in Bereichen höheren Druckes durch die Hand reversibel deformiert, in Bereichen niedrigeren Druckes entsprechend weniger. Dadurch kann sich der verformbare Bereich noch besser an die Hand eines Benutzers anpassen. Selbstverständlich ist es möglich, die Elastikkügelchen vor einem Formen des Griffelementes in das Naturstoff-Bindemittel-Gemisch einzubringen oder auch erst nach dem Formen des Griffelemente, insbesondere im verformbaren Bereich.

Vorteilhafterweise weisen die Elastikkügelchen einen Durchmesser zwischen 0,1 und 10mm, insbesondere zwischen 0,3mm und 5mm, vorzugsweise zwischen 1mm und 2,5mm auf. Dieser Elastikkügelchen haben den Vorteil, dass, zum Einen, eine homogene Verteilung im Naturstoff-Bindemittel-Gemisch sichergestellt werden kann und zum Anderen gleichzeitig eine ausreichende Verformbarkeit der Elastikkügelchen gewährleistet wird.

Zweckmäßigerweise enthält das Naturstoff-Bindemittel-Gemisch den Naturstoff mit einem Anteil von zumindest 50 Vol-%, insbesondere 55 Vol-% und 98 Vol-%, vorzugsweise zwischen 60 Vol-% und 95 Vol-%. Auf diese Weise wird zum Einen eine entsprechende angenehme Haptik bzw. -Gefühl bei einem Benutzer des Griffelementes erzielt, zum Anderen eine ausreichende Flexibilität, um das Griffelement für verschiedene Anwendungen, beispielsweise bei Einsatz mit einem Hammer oder einem Schraubenzieher an die jeweiligen Erfordernisse anzupassen. So steht beispielsweise bei einem Hammer die Festigkeit des Griffes und damit die sichere Führung des Hammers im Vordergrund, während bei einem Schraubenzieher, wo ein Drehmoment auf eine Schraube übertragen werden soll, ein eher anpassungsfähigerer, also leichter verformbarer Griff bevorzugt wird, um insbesondere bei schwergängigen Schrauben ein angenehmes Anliegen des Griffelementes in der Hand eines Benutzers des Schraubenziehers zu ermöglichen, sodass Schwielen, Wasserblasen etc. bei längerem Gebrauch nicht oder nur in sehr reduziertem Umfang auftreten.

Vorteilhafterweise liegt der Naturstoff im Naturstoff-Bindemittel-Gemisch in Faserform vor und insbesondere weist der Naturstoff eine Faserlänge zwischen 0,1 und 10mm, vorzugsweise zwischen 0,3mm und 5mm, insbesondere vorzugsweise zwischen 1mm und 2,5mm auf. Liegt der Naturstoff in Faserform vor und ist beispielsweise der Naturstoff Flachs, kann insbesondere mittels der Faserlänge zusätzlich die Haptik der Oberfläche des Griffelementes zwischen einem eher rauen Charakter, entsprechend kürzeren Fasern, und einem eher weichen, samtigen Haptikgefühl, entsprechend eher längeren Fasern, ausgebildet werden. Auch dies erhöht die Flexibilität bzw. den Einsatzbereich des Griffelementes und ermöglicht, das Griffelement an verschiedene Benutzer und / oder verschiedene Werkzeuge oder dergleichen anzupassen.

Zweckmäßigerweise weist das Griffelement ein inneres und ein äußeres Element auf, wobei das äußere Element den verformbaren Bereich aufweist und insbesondere das innere Element mit einer Aussparung zur Festlegung eines Werkzeugs versehen ist. Auf diese Weise ist es zum Einen möglich, das Griffelement bei bereits vorhandenen Werkzeugen nachzurüsten, indem ein Griff des nachzurüstenden Werkzeugs in eine Aussparung des inneren Elementes einfach eingeschoben und dort festgelegt wird, beispielsweise stoff-, kraft- und/oder formschlüssig, mittels Verkleben, etc. Selbstverständlich ist es möglich, das Griffelement auch einteilig auszubilden und in dem Griffelement eine Aussparung zur Festlegung eines Werkzeugs vorzusehen.

Vorteilhafterweise weist der verformbare Bereich zumindest eine Teil-Oberfläche auf, die im Wesentlichen frei von Bindemittel ausgebildet ist. Ist zumindest eine Teil-Oberfläche oder auch die gesamte Oberfläche des verformbaren Bereichs frei von Bindemittel, wird die Haptik zumindest der Teil-Oberfläche des Griffelementes noch weiter verbessert, indem durch die Abwesenheit von Bindemittel an der Oberfläche Poren des Naturstoffs im Naturstoff-Bindemittel-Gemisches freigelegt sind respektive auftreten, die auch eine Feuchtigkeitsaufnahme bei Minustemperaturen ermöglichen. Gleichzeitig ist das Griffelement hinreichend fest ausgebildet und weist eine gewünschte Haltbarkeit auf.

Zweckmäßigerweise wird zumindest der reversible verformbare Bereich mittels eines Oberflächenbearbeitungsverfahrens bearbeitet. Damit kann auf einfach Weise eine gewünschte Haptik des reversibel verformbaren Bereiches nach dem Formen des Griffelementes erreicht werden.

Vorteilhafterweise umfasst das Oberflächenbearbeitungsverfahren ein Aufrauverfahren, ein Gleitschleif- und / oder ein Sandstrahlverfahren. Mittels des Aufrauhverfahrens, des Gleitschleif- und / oder des Sandstrahlverfahrens kann auf einfache und kostengünstige Weise eine gewünschte Haptik des Griffelementes eingestellt werden, indem im Bereich der Oberfläche des verformbaren Bereiches mittels zumindest eines der vorgenannten Verfahren Bindemittel entfernt wird.

Vorteilhafterweise werden Elastikmittel in das Naturstoff-Bindemittel-Gemisch eingebracht, insbesondere in Form von elastischen Kügelchen. Auf diese Weise kann zusätzlich die Anpassungsfähigkeit bzw. Verformbarkeit des verformbaren Bereiches an die jeweiligen Bedürfnisse eines Werkzeugs, welches mit dem Griffelement versehen ist, angepasst werden.

Weiterhin ist in Anspruch 14 die Verwendung eines Griffelementes gemäß zumindest einem der Ansprüche 1 bis 9 zum Betätigen und / oder Halten eines Werkzeugs definiert. In Anspruch 15 ist die Verwendung eines Griffelementes gemäß zumindest einem der Ansprüche 1 bis 9 als Überzug eines Griffes eines Werkzeuges definiert.

Weitere Merkmale und Vorteile der Erfindung der Erfindung ergeben sich aus der nachfolgenden Beschreibung von Ausführungsbeispielen anhand der Zeichnung.

Dabei zeigt
- Figur 1a: ein Griffelement gemäß einer ersten Ausführungsform in Seitenansicht;
- Figur 1b: ein Griffelement gemäß der ersten Ausführung in der Draufsicht von unten sowie
- Figur 2: Schritte eines Verfahrens gemäß der ersten Ausführungsform der vorliegenden Erfindung.

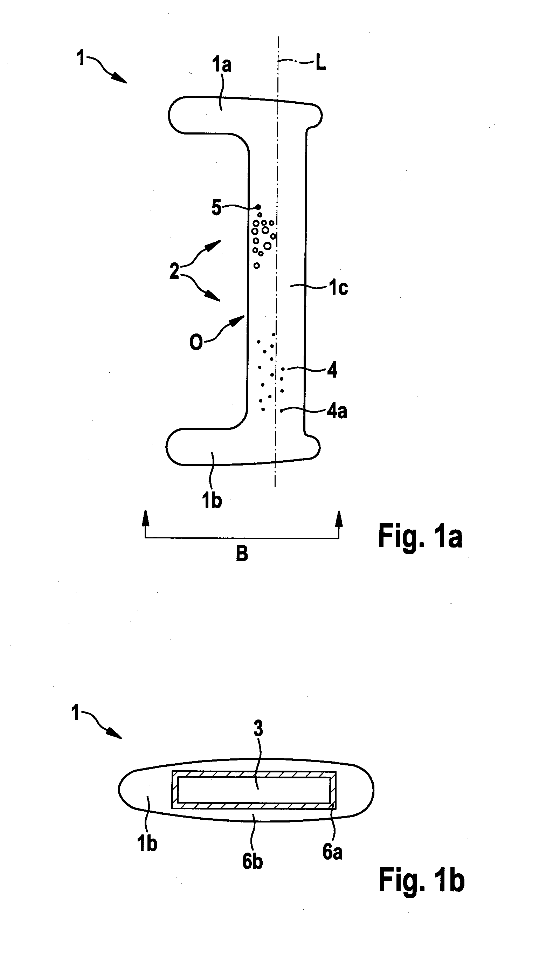

In Figur 1a ist ein Griffelement 1 gezeigt. Das Griffelement 1 umfasst einen oberen Abschnitt 1a und einen unteren Abschnitt 1b, welche im Wesentlichen zu einer Längsachse L des Griffelementes 1 ausgebildet sind. Die beiden Abschnitte 1a und 1b gemäß der Figur 1a sind sowohl links als auch rechts der Längsachse L von dieser vorstehend ausgebildet. Der obere Abschnitt 1a sowie der untere Abschnitt 1b weisen dabei auf der linken Seite der Längsachse L, welche in der Blattebene senkrecht von oben nach unten verläuft, einen größeren Vorstand auf in Bezug auf den jeweiligen Vorstand der rechten Seite.

Das Griffelement 1 weist weiter einen mittleren Abschnitt 1c auf, der sich entlang der Längsachse L erstreckt. Der mittlere Abschnitt 1c ist dabei in seinem unteren Bereich mit dem unteren Abschnitt 1b verbunden und im oberen Bereich mit dem oberen Abschnitt 1a. Der mittlere Abschnitt 1c ist im wesentlichen symmetrisch zu der Längsachse L ausgebildet und weist einen Vorstand senkrecht zur Längsachse L auf, welcher geringer ist als die Vorstände des oberen und unteren Abschnitts 1a, 1b.

Das Griffelement 1 mit seinem oberen Abschnitt 1a, dem unteren Abschnitt 1b sowie dem mittleren Abschnitt 1c enthält dabei ein Naturstoff-Bindemittel-Gemisch. Der Naturstoff ist vorzugsweise Leder. Das Leder 4a liegt im Leder-Bindemittel-Gemisch vorzugsweise in Partikelform vor. Die Partikel des Leders 4a sind dabei im Wesentlichen homogen im Leder-Bindemittel-Gemisch verteilt. Weiterhin sind im Leder-Bindemittel-Gemisch geleeartige Plastikkügelchen 5 mit einem Durchmesser zwischen 0,1 mm und 10 mm im Wesentlichen homogen verteilt. Auf diese Weise kann sich das Griffelement 1 auf einfache und effektive Weise in an eine Hand eines Benutzers anpassen. Damit wird ein hinsichtlich der Ergonomie verbessertes Griffelement 1 zur Verfügung gestellt. Die Plastikkügelchen 5 sind in dem durch Druck reversibel verformbaren Bereich 2 vorzugsweise angeordnet. Der reversibel verformbare Bereich 2 ist dabei im Wesentlichen der Bereich, der von einer Hand eines Benutzers betätigt wird. Selbstverständlich ist es dabei möglich, auch das gesamte Griffelement 1 mit oberen Abschnitt 1a, unterem Abschnitt 1b sowie mittlerem Abschnitt 1c reversibel verformbar auszubilden. Vorzugsweise ist der reversibel verformbare Bereich 2 im Bereich des mittleren Abschnitts 1c des Griffelementes 1 angeordnet. Der reversibel verformbare Bereich ist dabei so ausgebildet, dass sich dieser erst nach einer gewissen Zeitspanne kontinuierlich an eine Hand eines Benutzers anpasst. Auch das Zurückgehen des reversibel verformbaren Bereiches erfolgt kontinuierlich innerhalb einer gewissen Zeitspanne. Die Zeitspanne beträgt hier insbesondere mehr als 15 Minuten, vorzugsweise mehr als eine Stunde.

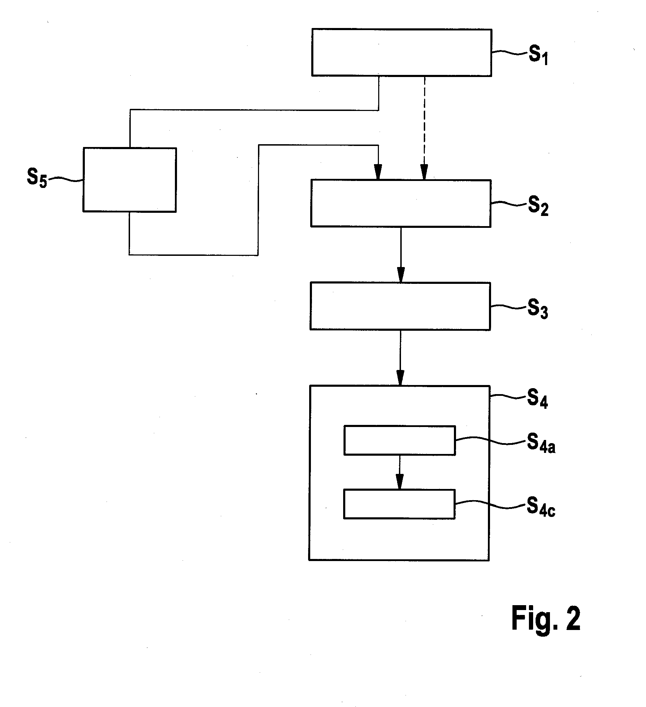

Die Figur 1b zeigt in der Draufsicht das Griffelement 1 gemäß Figur 1a entlang der Längsachse mit Blick auf den unteren Abschnitt 1b. Im Inneren des unteren Abschnitts 6b ist ein äußeres Element 1b angeordnet, und im Inneren ein inneres Element 6a. Das innere Element 6a ist dabei im wesentlichen rechteckförmig ausgebildet und im Allgemeinen hinsichtlich seiner Deformierbarkeit härter ausgebildet als das umgebende äußere Element 6b. Das im wesentlichen rechteckförmige innere Element 6a weist eine ebenso rechteckförmige Aussparung 3 auf, in die beispielsweise ein Griff eines Werkzeugs eingeführt werden kann. Selbstverständlich sind auch andere Formen für die Aussparung denkbar, beispielsweise kreisförmig, oval, etc. Zur Festlegung eines Griffes des Werkzeugs am Griffelement 1 kann dieses an dem Griffelement 1 beispielsweise form-, kraft- oder stoffschlüssig, beispielsweise mittels Verkleben, etc. festgelegt werden. Die Aussparung 3 kann sich dabei vollständig entlang der Längsachse L des Griffelementes 1 erstrecken, oder auch nur teilweise. So kann beispielsweise im Falle eines Hammers, das Griffelement in den Griff des Hammers lediglich teilweise eingeführt werden, so dass der Griff des Hammers teilweise in das Griffelement 1 hineinragt. Das Griffelement wurde hier gemäß Figur 2 mehrkomponentig mit einem äußeren und inneren Element beschrieben. Selbstverständlich ist es möglich, das Griffelement einstückig bzw., hergestellt aus dem Naturstoff-Bindemittel-Gemisch als einziger Komponente, auszubilden.

Figur 2 zeigt Schritte eines Verfahrens zur Herstellung eines Griffelementes gemäß der ersten Ausführungsform der vorliegenden Erfindung. Zunächst wird in einem ersten Schritt S₁ der Naturstoff, insbesondere Leder und/oder Flachs, und ein Bindemittel gemischt. Im Anschluss werden in einem Schritt S₅ Elastikmittel in das Naturstoff-Bindemittel-Gemisch eingebracht, insbesondere in Form von elastischen Kügelchen. Selbstverständlich kann der Schritt S₅ auch weggelassen werden. In einem weiteren Schritt S₂ wird nun das Griffelement 1 mittels des Naturstoff-Bindemittel-Gemisches geformt und in einem weiteren Schritt S₃ ein reversibel verformbarer Bereich ausgebildet. In einem weiteren Schritt S₄ wird ein Oberflächenbearbeitungsverfahren durchgeführt, wobei zunächst die Oberfläche in einem Schritt S₄ₐ aufgeraut wird und anschließend die Oberfläche in einem weitern Schritt S_{4c} mittels eines Sandstrahlverfahrens bearbeitet wird. Die beiden Oberflächenbearbeitungsverfahren dienen dazu, eine angenehme Haptik des Griffelementes 1 bei Betätigung desselben mit einer Hand zu gewährleisten. Das Elastikmittel ist vorzugsweise ein Kunststoffbindemittel, welches nach entsprechendem Aushärten eine gewünschte Festigkeit aufweist. Das Formen des Griffelementes kann dabei mittels eines Spritzgießverfahrens oder Extruderverfahrens oder ähnlichen Verfahren hergestellt werden.

Selbstverständlich ist es ebenso möglich, die Oberfläche O des Griffelementes 1 mit einer Profilierung insbesondere im elastisch verformbaren Bereich 2 und/oder im mittleren Bereich 1c zu versehen, um eine schnellere Anpassung des verformbaren Bereichs 2 in der Hand eines Benutzers zur Verfügung zu stellen. So kann beispielsweise bereits bei der Herstellung des Griffelementes eine Profilierung der Oberfläche O des Griffelementes 1 hinsichtlich einer üblichen Handgröße und üblichen Druckstellen erfolgen. Des weiteren ist es ebenso möglich, falls das Griffelement in Zwei- oder Mehrkomponentenform ausgebildet ist, die jeweiligen Elemente, also beispielsweise das äußere Element 6b und das innere Element 6a aus unterschiedlichen Naturstoff-Bindemittel-Gemischen und mit jeweils unterschiedlichen Komponenten, beispielsweise verschiedene Kunststoffbindemittel, welche zu einer späteren unterschiedlichen Härte der jeweiligen Elemente führen, auszubilden. Daneben ist es ebenso möglich, das innere Element vollständig aus Kunststoff, insbesondere einem Polymer herzustellen.

Vor einem Mischen eines Naturstoffes mit dem Bindemittel wird beispielsweise im Fall von Leder als Naturstoff, das Leder zunächst gereinigt und von Bakterien befreit. Im Anschluss wird dem Leder Feuchtigkeit entzogen und entsprechend der Verordnung (EG) No. 1907/2006 aufbereitet. Der Entzug der Feuchtigkeit erfolgt vorzugsweise durch Gefriertrocknen. Hierzu wird das Leder in einem Lufttrockner unterhalb von -35° Celsius vorbehandelt. Das getrocknete Leder wird mit einem Bindemittel, vorzugsweise einem Polymer für das Leder-Bindemittel-Gemisch vermengt. Das Naturstoff-Bindemittel-Gemisch wird auf eine Temperatur zwischen 100° und 200° Celsius, vorzugsweise zwischen 130° und 175° Celsius, erhitzt. Anschließend wird das Griffelement mittels des Leder-Bindemittel-Gemisches durch ein Einspritzen derselben in eine Form vorzugsweise mittels eines Spritzgießverfahrens hergestellt. Die Temperatur wird dabei so gewählt, dass die Qualität des Naturstoffes, hier des Leders, im Wesentlichen erhalten bleibt beziehungsweise nicht beeinträchtigt wird.

Das so entstandene Naturstoff-Bindemittel-Gemisch weist je nach gewünschter Anwendung des Griffelementes mindestens 50 Volumenprozent, insbesondere zwischen 55 Volumenprozent und 98 Volumenprozent, vorzugsweise zwischen 60 Volumenprozent und 95 Volumenprozent des Naturstoffes, hier Leder auf. Werden zusätzlich Elastikmittel, beispielsweise in Form von Elastikkügelchen in das Leder-Bindemittel-Gemisch eingebracht kann der jeweilige Anpassungsgrad des mit dem Leder-Bindemittel-Gemisch hergestellten Griffelementes sowohl durch Variation der Menge der Elastikkügelchen im Leder-Bindemittel-Gemisch als auch durch Variation des Durchmessers der Elastikkügelchen, insbesondere zwischen 0,1 mm und 10 mm, entsprechend angepasst werden. Selbstverständlich ist es dabei möglich, unterschiedliche Elastikkügelchen aus unterschiedlichen Kunststoffen mit jeweils unterschiedlichen Durchmessern in das Leder-Bindemittel-Gemisch einzubringen.

Das Bindemittel ist vorzugsweise ein Kunststoff, insbesondere Styrolbutadienstyrol, Etylenvinylacetat, Polypropylen, Polyethylen, Polystyrol, SEDS, TPO und/oder TPK. Das innere Element wird vorzugsweise aus Polypropylen, Polyethylen, Ethylenvinylacetat, Acrylnitrilbutadienstyrolpolymerisat, Styrolacrylnitrilcopolymerisat, Acrylesterstyrolacrylnitrilpolymer, Polystyrol oder TPK hergestellt. Als Naturstoff kann ebenfalls auch Kork oder Korkpartikel verwendet bzw. zum Einsatz kommen.

Zusammenfassend weist die Erfindung die Vorteile auf, dass ein Griffelement zur Verfügung gestellt wird, welches eine angenehme Haptik aufweist und gleichzeitig eine gewünschte Festigkeit und Haltbarkeit, so dass trotz einer Feuchtigkeitsaufnahme auch bei Minustemperaturen im Celsiusbereich die Haptik des Griffelementes sich nicht wesentlich verschlechtert. Weiter kann das Griffelement sowohl als Griffelement für einen Griff eines Werkzeugs als auch als Überzug bei einem Griff, oder auch als Manschette oder dergleichen verwendet werden, was die Einsatzmöglichkeiten des Griffelementes erheblich erweitert. Darüber hinaus bietet das Griffelement eine verbesserte Anpassung an die Hand eines Benutzers eines Werkzeugs an, so dass ein zuverlässigeres und sicheres und gleichzeitig angenehmes Handhaben des Werkzeugs mit dem Griffelement möglich wird.

## Patentansprüche

1. Griffelement (1) zur Handhabung von Werkzeugen und dergleichen,
wobei das Griffelement (1) ein Naturstoff-Bindemittel-Gemisch (4) aufweist **dadurch gekennzeichnet, dass**
das Griffelement (1) zumindest einen durch Druck reversibel verformbaren Bereich (2) aufweist.

2. Griffelement gemäß Anspruch 1,
**dadurch gekennzeichnet, dass**
der Naturstoff (4a) Leder und/oder Flachs und/oder Kork, insbesondere in Partikelform enthält.

3. Griffelement gemäß zumindest einem der Ansprüche 1-2,
**dadurch gekennzeichnet, dass**
das Naturstoff-Bindemittel-Gemisch(4) zusätzlich zumindest ein Elastikmittel (5)umfasst.

4. Griffelement gemäß zumindest Anspruch 3,
**dadurch gekennzeichnet, dass**
das Elastikmittel (5) in Form einer Mehrzahl von geleeartigen Elastikkügelchen ausgebildet ist.

5. Griffelement gemäß zumindest Anspruch 4,
**dadurch gekennzeichnet, dass**
die Elastikkügelchen (5) einen Durchmesser zwischen 0,1mm und 10mm, insbesondere zwischen 0,3mm und 5mm, vorzugsweise zwischen 1mm und 2,5mm, aufweisen.

6. Griffelement gemäß zumindest einem der Ansprüche 1-5,
**dadurch gekennzeichnet, dass**
das Naturstoff-Bindemittel-Gemisch den Naturstoff mit einem Anteil von zumindest 50 Vol-%, insbesondere zwischen 55 Vol-% und 98 Vol-%, vorzugsweise zwischen 60 Vol-% und 95 Vol-%, enthält.

7. Griffelement gemäß zumindest einem der Ansprüche 1-6,
**dadurch gekennzeichnet, dass**
der Naturstoff (4a) im Naturstoff-Bindemittel-Gemisch (4) in Faserform vorliegt, und dass insbesondere der Naturstoff (4a) eine Faserlänge zwischen 0,1mm und 10mm, vorzugsweise zwischen 0,3mm und 5mm, insbesondere vorzugsweise zwischen 1mm und 2,5mm, aufweist.

8. Griffelement gemäß zumindest einem der Ansprüche 1-7,
**dadurch gekennzeichnet, dass**
das Griffelement (6b) ein inneres (6a) und ein äußeres Element (6b) aufweist, wobei das äußere Element (6b) den verformbaren Bereich (2) aufweist und insbesondere das innere Element (6a) mit einer Aussparung (3) zur Festlegung eines Werkzeugs versehen ist.

9. Griffelement gemäß zumindest einem der Ansprüche 1-8,
**dadurch gekennzeichnet, dass**
der verformbare Bereich (2) zumindest eine Teiloberfläche (0) aufweist, die im Wesentlichen frei von Bindemittel ausgebildet ist.

10. Verfahren zur Herstellung eines Griffelementes insbesondere gemäß zumindest einem der Ansprüche 1-9, umfassend die Schritte Mischen (S₁) eines Naturstoffes und eines Bindemittels,
Formen (S₂) des Griffelementes mittels des Naturstoff-Bindemittel-Gemisches **dadurch gekennzeichnet, dass** in einem weiteren Schritt eine reversibel verformbarer Bereichs ausgebildet wird.

11. Verfahren gemäß Anspruch 10,
**dadurch gekennzeichnet, dass**
zumindest der reversibel vorformbare Bereich (2) mittels eines Oberflächenbearbeitungsverfahrens (S₄) bearbeitet wird.

12. Verfahren gemäß zumindest einem der Ansprüche 10-11,
**dadurch gekennzeichnet, dass**
das Oberflächenbearbeitungsverfahren (S₄) ein Aufrauhverfahren (S₄ₐ), ein Gleitschleif- (S_{4b}) und/oder ein Sandstrahlverfähren (S_{4c}) umfasst.

13. Verfahren gemäß zumindest einem der Ansprüche 10-12,
**dadurch gekennzeichnet, dass**
Elastikmittel (5) in das Naturstoff-Bindemittel-Gemisch (4) in einem weiteren Schritt (S₅) eingebracht werden, insbesondere in Form von elastischen Kügelchen.

14. Verwendung eines Griffelementes (1) gemäß zumindest einem der Ansprüche 1-9 zum Betätigen und/oder Halten eines Werkzeugs.

15. Verwendung eines Griffelementes (1) gemäß zumindest einem der Ansprüche 1-9 als Überzug eines Griffes eines Werkzeugs.
